(19) **Europäisches Patentamt / European Patent Office / Office européen des brevets**

(11) **EP 3 375 517 B1**

(12) **EUROPEAN PATENT SPECIFICATION**

(45) Date of publication and mention of the grant of the patent:
**08.03.2023 Bulletin 2023/10**

(21) Application number: **18158451.7**

(22) Date of filing: **23.02.2018**

(51) International Patent Classification (IPC):
**B01J 20/08** $^{(2006.01)}$     **B01J 20/04** $^{(2006.01)}$
**B01J 20/32** $^{(2006.01)}$     **B01J 20/30** $^{(2006.01)}$

(52) Cooperative Patent Classification (CPC):
**B01J 20/3071; B01J 20/043; B01J 20/08; B01J 20/3204; B01J 20/3236;** B01D 2253/25; B01D 2257/504; Y02C 20/40

(54) **ALKALI-PROMOTED ACTIVATED ALUMINA ADSORBENT**

ALKALI-GEFÖRDERTE AKTIVIERTE ALUMINIUMADSORPTIONSMITTEL

ADSORBANT D'ALUMINE ACTIVÉE AMÉLIORÉ AUX ALCALIS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2017 EP 17161639**

(43) Date of publication of application:
**19.09.2018 Bulletin 2018/38**

(73) Proprietor: **AIR PRODUCTS AND CHEMICALS, INC.**
**Allentown, Pennsylvania 18195 (US)**

(72) Inventors:
• **LAU, Garret Chi-Ho**
 **New Tripoli, Pennsylvania 18066 (US)**
• **SORENSEN, Erin Marie**
 **Allentown, Pennsylvania 18104 (US)**
• **CASTEEL, William Jack, Jr.**
 **Fountain Hill, Pennsylvania 18015 (US)**
• **TAYLOR, Fred William**
 **Coplay, Pennsylvania 18037 (US)**
• **GOLDEN, Timothy Christopher**
 **44300 Nantes (FR)**
• **QUINN, Robert**
 **Macungie, Pennsylvania 18062 (US)**

(74) Representative: **Kador & Partner PartG mbB**
**Corneliusstraße 15**
**80469 München (DE)**

(56) References cited:
**EP-A2- 1 749 571     US-A- 4 755 499**

**Description**

BACKGROUND

Before air can be introduced into a cryogenic air separation process in which oxygen and nitrogen are separated from one another, it is necessary to remove carbon dioxide present in the air at low levels, e.g. 400 ppm. If this is not done, the carbon dioxide will solidify in the air separation plant. Two methods generally used for such carbon dioxide removal are pressure swing adsorption (PSA) and temperature swing adsorption (TSA).

In each of these techniques, a bed of adsorbent is exposed to a flow of feed air for a period of time to adsorb $CO_2$ from the air. Thereafter, the flow of feed air is shut off from the adsorbent bed and the adsorbent is exposed to a flow of purge gas which strips the adsorbed $CO_2$ from the adsorbent and regenerates the adsorbent for further use. In TSA, the $CO_2$ is driven off from the adsorbent by heating the adsorbent in the regeneration phase. In PSA, the pressure of the purge gas is lower than that of the feed gas and the change in pressure is used to remove the $CO_2$ from the adsorbent.

Other components can be removed from the feed air by these processes, including hydrocarbons and water. These adsorption techniques can also be applied to feed gases other than air or to air to be purified for purposes other than use in an air separation plant. For example, other applications where trace or dilute $CO_2$ needs to be removed prior to a cryogenic separation include the cryogenic production of CO from synthesis gas, the production of liquefied natural gas, and production of dry $CO_2$-free air for a variety of applications.

The use of PSA for removing $CO_2$ from air prior to cryogenic air separation is described in numerous publications, e.g. U.S. Pat. No. 4,249,915 and U.S. Pat. No. 4,477,264. Initially, the practice was to use a dual bed of alumina for water removal followed by a zeolite such as 13X for $CO_2$ removal. More recently, all alumina PSA systems have been proposed, as described in U.S. Pat. No. 5,232,474. The advantages of an all alumina system include lower adsorbent cost, vessel design which does not need screens to separate the two different adsorbents, and better thermal stability in the adsorption vessel during blowdown and repressurization. It would be desirable however, to develop adsorbents having an improved $CO_2$ capacity so as to allow smaller bed sizes with lower capital costs and less void gas being lost during depressurization i.e. higher air recoveries.

Alumina is also used as an adsorbent in TSA and for this purpose it has been proposed to treat the alumina to form alkali metal oxides thereon to increase the adsorptive capacity of the alumina. By way of example, U.S. Pat. No. 4,493,715 teaches a method for removing $CO_2$ from olefin streams by contacting the feed gas with a regenerable, calcined adsorbent consisting essentially from 1 to 6 wt% of an alkali metal oxide selected from the group consisting of sodium, potassium, and lithium on alumina. The adsorbent was prepared by contacting alumina with an alkali metal compound which is convertible to the metal oxide on calcination.

U.S. Pat. No. 4,433,981 describes a process for removing $CO_2$ from a gaseous stream which comprises contacting the gas steam at a temperature up to about 300°C with an adsorbent prepared by impregnation of a porous alumina with a sodium or potassium oxide. The corresponding oxide can be prepared by impregnation with a decomposable salt and calcining at a temperature of 350°C to 850°C. Salts mentioned include alkali metal bicarbonates.

U.S. Pat. No. 3,557,025 teaches a method to produce alkalized alumina capable of adsorbing $SO_2$ by selectively calcining the alumina, and contacting with an alkali or ammonium bicarbonate salt to form at least 30% by weight alkalized alumina having the empirical formula $MAI(OH)_2CO_3$.

U.S. Pat. No. 3,865,924 describes the use of a finely ground mixture of potassium carbonate and alumina as an absorbent for carbon dioxide, which reacts with the carbonate and water to form bicarbonate. The absorbent mixture is regenerated by mild heating, e.g. at 93° C. (200° F.). The presence of stoichiometric quantities of water is essential and the alumina appears to be regarded as essentially a mere carrier for the potassium carbonate. Other carbonates may be used.

U.S. Pat. No. 5,232,474 discloses a PSA process using alumina in 70-100% of the bed volume to remove water and carbon dioxide from air. Preference is expressed for alumina containing up to 10 wt.% silica as opposed to the generality of aluminas which typically contain only about 1% silica.

U.S. Pat. No. 5,656,064 discloses treatment of alumina with a base without calcining to form an alkali metal oxide to increase substantially the $CO_2$ adsorption capacity of the alumina that is capable of regeneration under PSA conditions.

U.S. Pat. No. 6,125,655 discloses a TSA process for purifying an air flow containing carbon dioxide and water vapor, in which at least some of the $CO_2$ and water vapor impurities are removed by adsorbing the impurities on at least one calcined alumina containing at most 10% by weight (preferably 4 to 8 wt.%) of at least one alkali or alkaline-earth metal oxide, the adsorption being carried out at a temperature of between -10°C and 80°C. For PSA cycles, no more than 5 wt.% alkali or alkaline earth metal promotions was preferred.

U.S. Pat. No. 7,759,288 (US 2007/0037702 A1) discloses base treated aluminas that exhibit improved $CO_2$ capacity compared to untreated aluminas. The base treated aluminas prepared by physically mixing alumina and base during forming reportedly have (1) a higher surface area, (2) less hydrothermal aging, (3) improved $CO_2$ capacity, and

(4) lower cost than base treated aluminas produced by aqueous impregnation.

U.S. Pat. No. 5,656,064 and U.S. Pat. No. 6,125,655 teach that a physical incorporation (incipient wetness impregnation on formed beads or co-formed during bead rolling) of alkali carbonates or oxides on activated alumina enhances $CO_2$ capacity, and is optimized by alkali type, weight loading, and/or surface pH. The method of alkali incorporation can provide differences as well, as U.S. Pat. No. 7,759,288 teaches an improvement in capacity, surface area, and aging stability by co-forming instead of impregnation. The problem with these compositions, in PSA operation, is the loss in capacity between the first and second cycle of $CO_2$ exposure and regeneration purge. As U.S. Pat. No. 5,656,064 shows, $CO_2$ Henry's constants show at best 28% of their original $CO_2$ capacity after just one regeneration under vacuum at ambient temperature.

U.S. Pat. No. 4,755,499 refers to alumina adsorbents promoted by metal carbonates (alkali or earth alkali metals). At a given alumina content, the weight percentages given in the table on column 7 of this document always are higher than the carbonate contents of sample AA1 before washing.

Activated alumina adsorbents, promoted with alkali (e.g. Na, and K) compounds, are known for removing $CO_2$ from gas mixtures such as air. Alkali compounds increase the basicity of the alumina surface, which increases its affinity for $CO_2$ sorption. It is well-known in the art that $CO_2$ will react with the alkali oxides to form alkali carbonates, and further reaction of $CO_2$ can occur in the presence of water vapor to form alkali bicarbonate.

Industry desires improved adsorbents for removing $CO_2$ from gas mixtures containing low concentrations of $CO_2$.

Industry desires improved adsorbents for capturing $CO_2$ from ambient air.

Industry desires an improved process to produce adsorbents for removing $CO_2$ from gas mixtures.

Industry desires an improved device to produce dry, $CO_2$-free air.

Industry desires an improved device to produce dry, $CO_2$-free synthesis gas.

Industry desires an improved device to produce dry, $CO_2$-free natural gas.

BRIEF SUMMARY

The present disclosure relates to adsorbent particles for use in a process for removing $CO_2$ from a gas mixture containing $CO_2$, a method of making the adsorbent particles, a process for removing $CO_2$ from a gas mixture containing $CO_2$ using the adsorbent particles, and an adsorption unit comprising a bed containing said adsorbent particles.

The adsorbent particles of the invention are defined according to any one of claims 1 to 6.

The method of making the adsorbent particles of the invention is defined according to any one of claims 7 to 9.

The process for removing $CO_2$ from a gas mixture containing $CO_2$ using the adsorbent particles i of the invention s defined according to claim 10.

The adsorption unit of the invention comprising a bed containing the above adsorbent particles is defined according to claim 11.

BRIEF DESCRIPTION OF SEVERAL VIEWS OF THE DRAWINGS

FIG. 1 is a plot of end of feed $CO_2$ concentration versus feed contact time for as-received (unwashed) and washed adsorbent AA4.

FIG. 2 is a plot of FTIR absorbance spectra for as-received (unwashed) and washed AA1 adsorbent.

DETAILED DESCRIPTION OF THE PREFERRED EMBODIMENTS

The ensuing detailed description provides preferred exemplary embodiments.

The term "depleted" means having a lesser mole % concentration of the indicated component than the original stream from which it was formed. "Depleted" does not mean that the stream is completely lacking the indicated component.

The terms "rich" or "enriched" means having a greater mole % concentration of the indicated component than the original stream from which it was formed.

The adsorbent may be in any known particle form, for example, pellets, beads, powder, monoliths, laminates, or any other form known in the art.

The gas mixture may contain oxygen and nitrogen and may be a feed to a cryogenic air separation unit. The gas mixture may have a concentration of $CO_2$ that is 1 mole % or less than 1 mole %. The gas mixture may have a concentration of $CO_2$ that is greater than 5 ppmv $CO_2$. The gas mixture may also contain water and the adsorbent may also remove water from the gas mixture. The adsorbent may demonstrate simultaneous water and $CO_2$ removal.

The adsorbent according to the present disclosure comprises alumina, a carbonate compound, and one or more alkali metals. The adsorbent contains at least 0.9 weight %, preferably 1.0 weight %, or 1.5 weight %, or 2.0 weight %, or 2.5 weight %, or 3 weight% of the one or more alkali metals. The adsorbent contains at most 10 weight %, preferably 9 weight %, or 8 weight %, or 7 weight %, or 6 weight %, or 5 weight % of the one or more alkali metals. The weight % of the one or more alkali metals is the weight % of the respective weight of the alkali metal, not the weight % of the alkali compound. The one or more alkali metals are present in ionic form. The adsorbent may be 90 to 99 weight % alumina. The carbonate compound may be an alkali carbonate, for example, $K_2CO_3$. The weight % alkali metal may be determined by X-ray fluorescence (XRF) spectroscopy.

The alumina and carbonate compound may be co-formed or spray-formed to form the adsorbent.

The surface area of the adsorbent may range from 220 $m^2$/g to 400 $m^2$/g. Adsorbents with surface areas in this range are suitable for air pre-purification. Alumina adsorbents used in air pre-purification typically have a surface area greater than 220 $m^2$/g because this surface area is required to maintain high water capacity, and the alumina adsorbent must also be capable of removing water in addition to $CO_2$ to prevent solidification of both $CO_2$ and water in downstream cryogenic processes. Adsorbents having a surface area less than 220 $m^2$/g are generally not suitable for removing water from the feed gas mixture for air pre-purification for a cryogenic air separation plant.

The present inventors have discovered that washing an alkali salt promoted activated alumina adsorbent with water significantly improves the performance of the adsorbent for removing $CO_2$ from air in pressure swing and temperature swing adsorption processes. The adsorbent retains some alkali after washing so that enhanced $CO_2$ capacity remains, but water soluble carbonate species that appear to hinder the adsorbent's cyclic ability to sorb and desorb $CO_2$ are removed from the adsorbent.

In the adsorbent particles of the invention the amount of carbonate may lower than the amount of carbonate arithmetically necessary for stoichiometrically compensating the charge of the total amount of alkali metal, or in the adsorbent the amount of carbonate may be at least by a factor of 1.1 lower than the amount of carbonate arithmetically necessary for stoichiometrically compensating the charge of the total amount of alkali metals. In order to fully compensate the charge of the alkali metals in the adsorbent arithmetically an amount of two alkali metal ions per carbonate (ion) is necessary, as e.g. in $K_2CO_3$. Accordingly, in this embodiment of the adsorbent, the molar ratio of alkali metal ions to carbonate ions is higher than 2, or is 2.2 or higher, respectively. The amount of alkali metals in the adsorbent can be determined using X-ray fluorescence spectroscopy data. The amount of carbonate ions can be determined using the FT IR method performed to determine the carbonate/alumina peak ratios (see below), by using standards of known carbonate contents and correlating the carbonate IR peak areas to a carbonate quantity.

The adsorbent is characterized by a carbonate to alumina intensity ratio, $R_2$, having a value less than or equal to 0.0150 as determined by Fourier Transform infrared (FTIR) spectroscopy of a crushed sample of the adsorbent, wherein the washed and dried adsorbent particles have said carbonate to alumina intensity ratio, $R_2$, which is smaller than the carbonate to alumina intensity ratio, $R_1$, before washing The value of the carbonate to alumina intensity ratio may be less than or equal to 0.014, or less than or equal to 0.013. The value of the carbonate to alumina intensity ratio may be equal to or more than 0.003, or equal to or more than 0.0035, or equal to or more than 0.005. This carbonate to alumina intensity ratio is lower than the carbonate to alumina intensity ratios found in prior art adsorbents.

The carbonate to alumina intensity ratio correlates to the ratio of the mass fraction of carbonate to alumina.

The Fourier Transform infrared (FTIR) spectroscopy may be done, for example, using a Nicolet Nexus 670 FTIR interferometer.

The crushed sample is formed by crushing a sample of the adsorbent, for example, using a mortar and pestle. The crushed sample may have a mean particle size ranging from 10 microns to 300 microns. The particle size may be determined by the method described by Eshel et al. in Soil Sci. Soc. Am. J. 68:736-743 (2004) , using a Horiba LA-950 laser particle size analyzer.

As part of the measurement method, the crushed sample of adsorbent is pressed on a diamond crystal in a SmartORBIT™ Attenuated Total Reflectance accessory.

The carbonate to alumina intensity ratio is a ratio of a peak absorbance intensity for carbonate, $AI_{carbonate}$, to a peak absorbance intensity for alumina, $AI_{alumina}$, (i.e. $R = AI_{carbonate}/ AI_{alumina}$), each peak absorbance intensity obtained after subtracting a baseline signal intensity. The peak absorbance intensity for alumina and the peak absorbance intensity for carbonate are observed by Fourier Transform infrared (FTIR) spectroscopy of the crushed sample of the adsorbent. The peak absorbance intensity for alumina, $AI_{alumina}$, is observed at an FTIR wavenumber in a range from 420 $cm^{-1}$ to 520 $cm^{-1}$, and the peak absorbance intensity for carbonate, $AI_{carbonate}$, is observed at an FTIR wavenumber in a range from 1300 $cm^{-1}$ to 1400 $cm^{-1}$. The peak absorbance intensity is the maximum value in the specified range.

The baseline signal intensity is a linear baseline function determined from two local minimum values of absorbance intensity between frequencies ranging from 1100 $cm^{-1}$ to 1800 $cm^{-1}$. Determining baseline signal intensities and subtracting baseline signal intensities from absorbance intensity spectra is routine and standard in the field of FTIR spectroscopy.

The peak absorbance intensity for alumina and the peak absorbance intensity for carbonate may be as determined from an FTIR spectrum as obtained by co-adding multiple scans. In the present case, it has been found beneficial to co-add 128 scans at 4 $cm^{-1}$ resolution using a Nicolet Nexus 670 FTIR interferometer.

The present disclosure also relates to methods for making adsorbent particles, e.g. particles of adsorbents as described in any of the above embodiments, comprising alumina, one or more alkali metals, and a carbonate compound for adsorbing $CO_2$ having improved sorbing and desorbing characteristics.

The methods for making adsorbent particles comprise washing alumina materials comprising alumina, one or more alkali metals, and a carbonate compound, which are often referred to as alkali-promoted activated alumina materials comprising a carbonate compound, with water, and drying the washed alumina materials to form the adsorbent particles, wherein the washed and dried adsorbent particles have a carbonate to alumina intensity ratio, $R_2$, which is smaller than the carbonate to alumina intensity ratio, $R_1$, of the alumina compound which comprises one or more type(s) of alkali metal ions and carbonate ions before washing; and wherein the carbonate to alumina intensity ratio is as determined by Fourier Transform infrared (FTIR) spectroscopy, as described above. The materials are preferably washed with water containing less than 100 ppm total dissolved solids, and more preferably deionized water. Total dissolved solids may be measured, for example, by the method described in American Society of Testing and Materials (ASTM) D5907-13.

Alkali-promoted activated alumina materials comprising a carbonate compound are available commercially, for example, from Axens, BASF, Porocel and/or UOP.

Alkali-promoted activated alumina materials may be formed by incorporating an alkali metal carbonate into activated alumina materials to form alkali-promoted alumina materials. The alkali-promoted alumina materials may be calcined in an atmosphere, for example an air atmosphere, to form the alkali-promoted activated alumina materials, which are subsequently cooled. Calcining temperatures typically range from about 300°C to 350°C. Activated alumina production is well-known and described, for example, in U.S. Pat. Nos. 3,226,191, 4,568,664, and 5,935,894.

The alkali-promoted activated alumina materials may be made by incorporating alkali metal carbonate into an activated alumina structure by spray coating an alumina support structure. The alkali-promoted activated alumina materials may be made by incorporating alkali metal carbonate into an activated alumina structure by co-forming the alkali metal carbonate with alumina to form the alkali-promoted activated alumina materials. Any known process for making alkali-promoted activated alumina materials may be used.

The washing may be done in a batch or continuous process.

Washing does not remove all of the alkali - some remains either as water insoluble $K_2Al(CO_3)_2OH$ dawsonite phase, or potassium cations intercalated into gibbsite phases on the activated alumina surface. This remaining alkali enhances the surface basicity enough to increase equilibrium $CO_2$ capacity compared to unpromoted alumina, but does not hinder $CO_2$ kinetics. Pure $K_2CO_3$ can limit rates of $CO_2$ sorption by its relatively slow reaction with $CO_2$ as described by Rahimpour et al., in Chemical Engineering and Processing 43 (2004) pp. 857-865.

The carbonate to alumina intensity ratio of a crushed sample of the adsorbent particles as determined by FTIR spectroscopy is decreased by washing the adsorbent with water.

The alkali-promoted activated alumina materials may be washed sufficiently to produce adsorbent particles having a carbonate to alumina intensity ratio, $R_2$, which is smaller than the carbonate to alumina intensity ratio, $R_1$, of the alkali-promoted activated alumina materials before washing.

The alkali-promoted activated alumina materials may be washed sufficiently to produce adsorbent particles having a carbonate to alumina intensity ratio, $R_2$, having a value less than or equal to 0.0150 as determined by Fourier Transform infrared (FTIR) spectroscopy of a crushed sample of the adsorbent particles. The value of the carbonate to alumina intensity ratio may range from 0.003 to 0.0150 or may range from 0.0035 to 0.014 or from 0.005 to 0.013 as a result of washing with water.

The description above relating to the adsorbent regarding the carbonate to alumina intensity ratio, FTIR spectroscopy, crushed sample, etc. applies also to this embodiment of the method for making adsorbent particles.

The pH of a washing solution in equilibrium with a quantity of adsorbent after washing is also decreased by washing the adsorbent with water. The method of making the adsorbent particles can therefore also be characterized by the pH of a washing solution after washing the adsorbent.

The alkali-promoted activated alumina materials may be washed with water until the alkali-promoted activated alumina materials have a pH in solution of 9.5 or less than 9.5 or less than 9 thereby forming washed alumina materials. The pH in solution is determined by measuring the pH of an equilibrated 2 liter solution of deionized water containing 100 g of the washed alumina materials. The solution may be considered equilibrated if the pH does not change after repeated measurements over the period of several hours. The pH may be measured using a digital Fisher Science Education pH/ion 510 meter. The pH meter may be calibrated with standard buffer solutions at 4.0, 7.0, and 10.0.

Alkali-promoted activated alumina materials as received from a supplier have a pH in solution of greater than 9 where the pH in solution is as determined by measuring the pH of an equilibrated 2 liter solution of deionized water containing 100 g of the as-received alkali-promoted activated alumina materials.

The washed alumina materials may be dried in an oven at a temperature ranging from 25°C to 100°C.

The washed alumina materials may be dried in air, a vacuum, or an atmosphere containing greater than 79 mole % $N_2$ to 100 mole % $N_2$, or an atmosphere containing Ar or He. Generally, the drying atmosphere should preferably contain less than 50 ppmv $CO_2$ and contain water with a dew point ranging from -90°C to -40°C.

The present disclosure also relates to a process for removing $CO_2$ from a gas mixture containing $CO_2$. The gas mixture may contain oxygen and nitrogen, and may be a feed to a cryogenic air separation unit. The gas mixture may have a concentration of $CO_2$ that is 1 mole% $CO_2$ or less than 1 mole % $CO_2$. The gas mixture may have a concentration of $CO_2$ that is greater than 5 ppmv. The gas mixture may also contain water and the adsorbent may also remove water from the gas mixture.

The process comprises passing the gas mixture containing $CO_2$ into a bed containing the adsorbent particles of the invention having the desired characteristics as described above or made by the methods of the invention described above, and withdrawing a $CO_2$-depleted gas from the bed.

The process may be a pressure swing adsorption (PSA) process. Pressure swing adsorption is well-known. PSA cycles suitable for use with the present adsorbent include U.S. Pat. Nos. 5,656,065, 5,919,286, 5,232,474, 4,512,780, 5,203,888, 6,454,838, and 5,156,657, and U.S. Pat. Appl. No. 2014/0373713.

The process may be a temperature swing adsorption (TSA) process. Temperature swing adsorption is well-known. TSA cycles suitable for use with the present adsorbent include U.S. Pat. Nos. 5,614,000, 5,855,650, 7,022,159, 5,846,295, 5,137,548, 4,541,851, 4,233,038, and 3,710,547.

The present disclosure also relates to an adsorption unit. The adsorption unit comprises a bed containing the adsorbent particles of the invention having the desired characteristics as described above and/or made by the methods of the invention described above.

EXAMPLES

Several samples of commercially-supplied activated alumina beads having a bead diameter of 2 mm, were washed with deionized water. The specifications for each of the samples are shown in Table 1. Alkali promoter loadings are nominal values, as an average weight percent from a typical commercial lot manufacture. The measured alkali metal content is from X-ray fluorescence spectroscopy data.

Table 1.

| Adsorbent | AA1 | AA2 | AA3 | AA4 |
|---|---|---|---|---|
| Surface area ($m^2/g$) | 230 | 266 | 230 | 261 |
| Bulk density ($kg/m^3$) | 873 | 913 | 766 | 791 |
| Particle size distribution | 95% between 8×14 Tyler mesh | 95% between 8×14 Tyler mesh | 95% between 8×14 Tyler mesh | 95% between 8×14 Tyler mesh |
| Alkali promoter | $K_2CO_3$ | $K_2CO_3$ | $Na_2O$ | $K_2CO_3$ |
| Promoter loading (wt %) before washing | 5 | 8 | 13 | 8 |
| Measured alkali metal content before washing (wt. %) | 2.5 | 4.8 | 10.0 | 4.9 |
| Measured alkali metal content after washing (wt. %) | 0.7 | 2.5 | 4.0 | 3.1 |

Adsorbent AA1 is promoted with 5 wt% potassium carbonate. The adsorbent is a spray-formed adsorbent, and falls within the scope of the adsorbent described in U.S. Pat. No. 5,656,064. 102 grams of the adsorbent was added to 2 liters of deionized water and manually stirred for several minutes. After equilibration, the pH of this 2 liter water solution was 11. The pH was measured using a digital Fisher Science Education pH/ion 510 meter, calibrated with standard buffer solutions at 4.0, 7.0, and 10.0. The solution was decanted. This soaking/washing process was repeated 14 times, after which the beads were filtered from the washing solution with a Buchner funnel. The solution over the alumina beads on the final wash measured a pH of 9.

After filtration the beads were dried in air in an oven at 90°C.

Other adsorbents were similarly washed and dried. These adsorbents included potassium carbonate co-formed adsorbent, AA2, which falls within the scope of the adsorbent described in U.S. Pat. No. 7,759,288, sodium oxide promoted activated alumina, AA3, which falls within the scope of U.S. Pat. No. 6,125,655, and AA4, another commercially available potassium carbonate co-formed adsorbent. An example of AA3 production is described in US 6,125,655 col. 5 line 18. NaOH is used as the impregnating alkali compound, and calcination of NaOH on alumina is described to form an alumina that contains sodium oxide ($Na_2O$). While no explicit mention of carbonate is made, it is well known in the art that sodium hydroxide will react with trace carbon dioxide in air to form sodium carbonate. Under the calcination temperature of >150 °C taught in US 6,125,655, the formation of $Na_2CO_3$ is quite favorable (Harris, The Canadian Journal of Chemical Engineering, Volume 41, Issue 4, 1963). Furthermore, it is also highly thermodynamically favorable for $Na_2O$ to react with $CO_2$ at ambient temperature to form $Na_2CO_3$ as well, with a heat of reaction of -77 kcal.

Each of the adsorbents was tested in a pressure swing adsorption test rig. Unwashed and washed samples of the adsorbents were tested.

For each adsorbent test, a 1.9 cm (0.75 inch) diameter by 45.7 cm (18 inch) tall vessel was filled with respective adsorbent particles. The single vessel was cycled under PSA conditions with a feed gas flowing at 5 liters per minute for 10 minutes at 308 kPa absolute (30 psig) pressure, followed by depressurization to 136 kPa absolute (5 psig), and a regeneration purge gas flowing at 3.5 liters per minute for 10 minutes at 136 kPa absolute (5 psig) pressure. The feed gas was a gas mixture containing air with 400 ppm $CO_2$. The purge gas was $N_2$. The vessel containing the respective adsorbents were cycled until a steady state was achieved.

The concentration of $CO_2$ at the exit end of the vessel was measured during the feed step. The concentration of $CO_2$ at the end of the feed step was recorded and a mean value of the $CO_2$ concentration at the end of feed step calculated for 10 cycles after steady state was achieved. The mean values of the $CO_2$ concentration at the end of feed for each of the adsorbents in as-received and washed are shown in Table 2.

It is shown that water washed versions of promoted alumina adsorbents reduce the amount of $CO_2$ present at the end of PSA feed steps in cyclic operation, demonstrating that the washed alumina is removing more $CO_2$ than the as-received promoted alumina under equivalent process conditions.

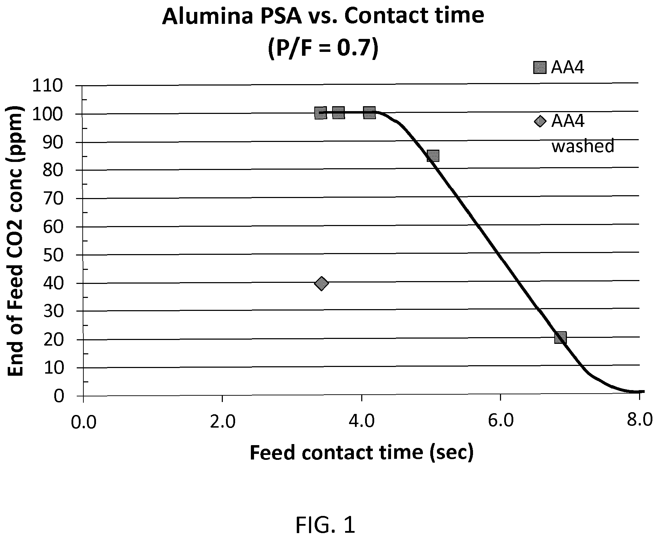

In another series of tests, adsorbent AA4 was cycled with incrementally slower feed and purge gas flow rates, and longer feed and purge step times such that the total volume of feed gas (50 liters) and total volume of purge gas (35 liters) processed was the same as the PSA test conditions described above. The resulting effect was an increase to the empty bed contact time (gas flow rate divided by empty bed volume) in both feed and regeneration steps. As shown in FIG. 1, the unwashed AA4 requires a much longer contact time to achieve the same $CO_2$ removal performance as washed AA4. The results show that washing the adsorbents improves the kinetics of $CO_2$ adsorption and desorption such that equivalent PSA performance can be achieved with 45% less contact time vs. un-washed alumina adsorbent. The improved kinetics reduces bed size and associated capital costs.

Table 2.

|  | AA1 | | AA2 | |
|---|---|---|---|---|
|  | as-received | washed | as-received | washed |
| $CO_2$ (ppm) | 58.0 | 34.7 | 72.8 | 36.0 |

Table 2. (cont'd)

|  | AA3 | | AA4 | |
|---|---|---|---|---|
|  | as-received | washed | as-received | washed |
| $CO_2$ (ppm) | >100 | 16.3 | >100 | 39.5 |

The impact of washing on the percent alkali utilization was also determined. The percent alkali utilization, or alkali utilization is defined as:

$$100 * (C_{PAA} - C_{AA}) / C_{CO2}$$

where

$C_{PAA}$ = $CO_2$ capacity of promoted activated alumina, in mmol/g;
$C_{AA}$ = $CO_2$ capacity of unpromoted activated alumina, in mmol/g; and
$C_{CO2}$ = calculated capacity if all $K_2CO_3$ loaded on alumina reacted with $CO_2$, in mmol/g.

Unpromoted activated alumina, as-received (unwashed) and washed AA4 were tested using a thermogravimetric analyzer (TGA) and potassium content measured by XRF). The as-received AA4 had 4.9 weight % K, corresponding to 0.00063 moles $K_2CO_3$/g, and the washed AA4 had 3.1 weight % K, corresponding to 0.00040 moles $K_2CO_3$/g.

For each of the samples, 50 mg of adsorbent were loaded into the TGA. An initial drying step under pure $N_2$ to 100°C. was performed. While held isothermal at 30°C., 1% $CO_2$ in $N_2$ was flowed over the sample at 50 mL/min for 60 min. The sweep gas was then switched to pure $N_2$, maintained at 30°C., and flowed for another 60 min. These latter two steps were repeated 5 times, and the weight change between the beginning and end of the 1% $CO_2$ in $N_2$ step recorded as $CO_2$ uptake capacity.

The results of the TGA are shown in Table 3.

For as-received AA4 ($K_2CO_3$ promoted alumina), the utilization is shown to be about 40% in the first exposure to $CO_2$, and drops to only 4% after 5 cycles of $CO_2$ exposure and ambient regeneration in $N_2$. To contrast, it is demonstrated that after water washing the AA4 adsorbent, the first cycle utilization of $K_2CO_3$ improves to 50%, while cycle 5 utilization improves to 12%, which is 3 times that of the sample without washing. In addition, the washed sample displays a slower rate of capacity loss than the unwashed sample. The unwashed retains only 22% (0.080/0.362) of its original capacity on the 5th cycle, while the washed sample retains 32% (0.104/0.323) of its original capacity.

Table 3.

| | $CO_2$ capacity (mmol/g) | | $K_2CO_3$ Utilization (%) | |
|---|---|---|---|---|
| | Cycle 1 | Cycle 5 | Cycle 1 | Cycle 5 |
| Unpromoted activated alumina | 0.125 | 0.054 | - | - |
| AA4 | 0.362 | 0.080 | 38 | 4 |
| Washed AA4 | 0.323 | 0.104 | 50 | 12 |

The change of the composition of each adsorbent as a result of washing each adsorbent was determined using Fourier Transform infrared (FTIR) spectroscopy.

Each of the adsorbents, both as-received and washed samples, were each individually manually ground with a mortar and pestle until the mean particle size was between 10 and 300 microns as determined using a Horiba LA-950 laser particle analyzer. The resulting powder was dried in an oven at 90°C. for 12 hours in an air atmosphere. After drying, each powder sample was pressed onto a diamond crystal in a SmartORBIT™ ATR accessory and a spectrum was obtained by co-adding 128 scans at 4 cm$^{-1}$ resolution with a Nicolet Nexus 670 FT-IR interferometer.

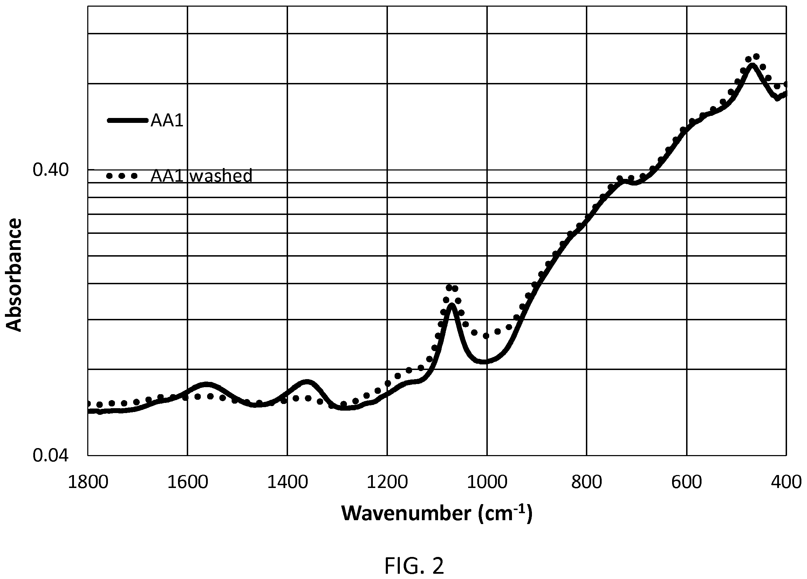

An adsorbance spectrum for AA1 is shown in FIG. 2. The peak absorbance intensity for alumina is observed at an FTIR wavenumber in a range from 420 cm$^{-1}$ to 520 cm$^{-1}$, and the peak absorbance intensity for carbonate is observed at an FTIR wavenumber in a range from 1300 cm$^{-1}$ to 1400 cm$^{-1}$.

The measured carbonate and alumina peak intensities are corrected by subtracting the baseline signal intensity, measured as a linear baseline function determined from two local minimum values of absorbance intensity between frequencies ranging from 1100 cm$^{-1}$ to 1800 cm$^{-1}$. For example, the baseline function for the FTIR spectra measured for AA1, was calculated using values at wavelengths of 1292 cm$^{-1}$ and 1751 cm$^{-1}$, where the absorbance intensities (AI) were 0.0587 and 0.0574, respectively. The linear function:

$$AI = a * W + b$$

where

AI = absorbance intensity
W = wavelength in cm$^{-1}$

$$a = (0.0587 - 0.0574) / (1292 - 1751) = -2.83 \times 10^{-6}$$

$$b = 0.0587 - (-2.83 \times 10^{-6}) \cdot 1292 = 0.0624$$

was determined. The absorbance intensity of the baseline at the carbonate peak wavenumber of 1359 cm-1, was then calculated as:

$$AI = -2.83 \times 10\text{-}6 * 1359 + 0.0624 = 0.0585.$$

The same baseline absorbance intensity is used for the alumina peak wavenumber, due to the relative closeness in frequency of the alumina and carbonate wavenumbers, and the insignificance of baseline variation versus the larger intensity of the alumina peak.

The measured intensities, baseline intensity, and baseline subtracted corrected intensities taken from the adsorbance spectrum shown in FIG. 2 are summarized in Table 4 for AA1 and washed AA1. The baseline corrected carbonate peak intensity is the peak intensity minus the baseline intensity. For example, the baseline corrected carbonate peak intensity is 0.0724-0.0585=0.0139.

Table 4.

|  | Carbonate peak intensity | Alumina peak intensity | Baseline intensity | Baseline corrected carbonate peak intensity | Baseline corrected alumina peak intensity |
|---|---|---|---|---|---|
| AA1 as received | 0.0724 | 0.930 | 0.0585 | 0.0139 | 0.872 |
| AA1 washed | 0.0638 | 1.02 | 0.0604 | 0.00340 | 0.955 |

The baseline corrected absorbance intensity for the carbonate peak and the alumina peak, along with the carbonate to alumina intensity ratio, are shown in Table 5 for each of the adsorbents, as-received and washed. The carbonate to alumina intensity ratio is calculated by dividing the baseline corrected carbonate peak intensity by the baseline corrected alumina peak intensity, e.g. for the as-received AA1, the carbonate to alumina intensity ratio is 0.0139/0.872=0.0159.

Table 5.

| absorbance intensity (counts/sec) | AA1 | | AA2 | |
|---|---|---|---|---|
|  | as-received | washed | as-received | washed |
| carbonate | 0.0139 | 0.00340 | 0.0151 | 0.00970 |
| alumina | 0.872 | 0.955 | 0.700 | 0.713 |
| carbonate/alumina | 0.0159 | 0.00356 | 0.0216 | 0.0136 |

Table 5. (cont'd)

| absorbance intensity (counts/sec) | AA3 | | AA4 | |
|---|---|---|---|---|
| | as-received | washed | as-received | washed |
| carbonate | 0.0267 | 0.0122 | 0.0121 | 0.00860 |
| alumina | 0.730 | 0.985 | 0.666 | 0.769 |
| carbonate/alumina | 0.0366 | 0.0124 | 0.0182 | 0.0112 |

The results in Table 5 show that that the carbonate to alumina intensity ratio is significantly reduced as a result of washing the adsorbent, which correspondingly shows that the carbonate species are significantly reduced as a result of washing the adsorbent.

As a result of washing the adsorbents the carbonate to alumina intensity ratio is reduced below 0.0150 for all of the adsorbents, a value less than any of the as-received adsorbents.

It is unexpected that washing does not remove the majority of the potassium given the high water solubility of $K_2CO_3$. For the AA1 adsorbent, potassium content only drops from 4.9 wt% to 3.1 wt% after washing (63% remains on the surface). Table 1 in U.S. Pat. No. 7,759,288 patent shows $CO_2$ capacity increases as you go from 0, 5, and 8 wt% $K_2CO_3$. The result in this disclosure, where removing carbonate from the alumina increases $CO_2$ capacity in cyclic operation is highly unexpected.

In view of the results shown in Table 2 above, it is seen that the low carbonate containing compositions allow higher utilization of the alkali, particularly for PSA cycles and low temperature TSA cycles.

In this disclosure, it is shown that by removing the unreacted alkali carbonates via water washing, the kinetics of $CO_2$ sorption/desorption is improved, cyclic $CO_2$ capacity is increased, and utilization of the $K_2CO_3$ is increased. This leads to better overall performance in PSA cyclic conditions compared to as-received promoted activated alumina as shown in Table 2.

The utility the present adsorbent provides is a new composition of alumina that provides better $CO_2$ removal performance in a PSA system, particularly for $CO_2$ removal prior to cryogenic distillation of air, and a method of manufacture where alkali carbonate or oxide promoted activated alumina can be modified, regardless of promotion method, for improved use in PSA cycles to remove $CO_2$ from a gas composition.

The washing step is shown to improve PSA performance in various promoted aluminas, including salt sprayed, co-formed, and Na or K impregnated species. IR spectroscopy confirms that alkali promoted aluminas can be modified to a unique composition after washing, where very little carbonate remains in the material.

**Claims**

1.    Adsorbent particles for use in a process to remove $CO_2$ from a gas mixture containing $CO_2$,

   wherein the adsorbent is defined as follows:

      - alumina;
      - a carbonate compound; and
      - one or more alkali metals;

   wherein the total amount of alkali metals in the adsorbent is from 0.9 weight % to 10 weight %; and

wherein the adsorbent has a carbonate to alumina intensity ratio, $R_2$, the carbonate to alumina intensity ratio, $R_2$, having a value less than or equal to 0.0150, where the carbonate to alumina intensity ratio is as determined by Fourier Transform infrared (FTIR) spectroscopy, as described in the description, wherein the adsorbent particles are produced by a method comprising the following steps:

washing alumina materials which comprise one or more alkali metals and a carbonate compound with water; and
drying the washed alumina materials to form the adsorbent particles;
wherein the washed and dried adsorbent particles have said carbonate to alumina intensity ratio, $R_2$, which is smaller than the carbonate to alumina intensity ratio, $R_1$, before washing.

2. The adsorbent particles according to claim 1 wherein the total amount of alkali metals in the adsorbent is from 1.0 weight % to 8 weight %.

3. The adsorbent particles according to any one of the preceding claims wherein the amount of alumina in the adsorbent is from 90 to 99 weight %.

4. The adsorbent particles according to any one of the preceding claims wherein the alkali metals are Na and/or K.

5. The adsorbent particles according to any one of the preceding claims wherein in the adsorbent the amount of carbonate is lower than the amount of carbonate arithmetically necessary for stoichiometrically compensating the charge of the total amount of alkali metals.

6. The adsorbent particles according to any one of the preceding claims wherein the value of the carbonate to alumina intensity ratio ranges from 0.003 to 0.0150.

7. A method for making adsorbent particles according to any of claims 1 to 6 for use in a process to remove $CO_2$ from a gas mixture containing $CO_2$, the adsorbent particles comprising alumina, one or more alkali metals, and a carbonate compound, the method comprising:

washing alumina materials which comprise one or more alkali metals and a carbonate compound with water; and
drying the washed alumina materials to form the adsorbent particles; wherein the washed and dried adsorbent particles have a carbonate to alumina intensity ratio, $R_2$, which is smaller than the carbonate to alumina intensity ratio, $R_1$, of the alumina compound which comprises one or more type(s) of alkali metal ions and carbonate ions before washing; and
wherein the carbonate to alumina intensity ratio is as determined by Fourier Transform infrared (FTIR) spectroscopy, as described in the description.

8. The method according to claim 7 wherein the alumina materials which comprise one or more alkali metals and a carbonate compound are washed with water until the alumina materials have a pH in solution of 9.5 or less thereby forming washed alumina materials, the pH in solution as determined by measuring the pH of an equilibrated 2 liter solution of deionized water containing 100 g of the washed alumina materials.

9. The method according to any one of claims 7 or 8 wherein the alumina materials which comprises one or more alkali metals and a carbonate compound are washed with water containing less than 100 ppm total dissolved solids.

10. A process for removing $CO_2$ from a gas mixture containing $CO_2$, the process comprising:

passing the gas mixture containing $CO_2$ into a bed containing the adsorbent particles according to any one of claims 1 to 6; and
withdrawing a $CO_2$-depleted gas from the bed.

11. An adsorption unit comprising a bed containing the adsorbent particles according to any one of claims 1 to 6.

**Patentansprüche**

1. Adsorbenspartikel zur Verwendung bei einem Prozess zum Entfernen von $CO_2$ aus einem $CO_2$-haltigen Gasge-

misch,

wobei das Adsorbens wie folgt definiert ist:

- Aluminiumoxid;
- eine Karbonatverbindung; und
- ein oder mehrere Alkalimetalle;

wobei eine Gesamtmenge an Alkalimetallen in dem Adsorbens 0,9 Gew.-% bis 10 Gew.-% beträgt; und

wobei das Adsorbens ein Karbonat- zu Aluminiumoxidintensitätsverhältnis $R_2$ aufweist, wobei das Karbonat- zu Aluminiumoxidintensitätsverhältnis $R_2$ einen Wert kleiner oder gleich 0,0150 aufweist, wobei sich das Karbonat- zu Aluminiumoxidintensitätsverhältnis wie von Fourier-Transformation-Infrarotspektroskopie (FTIR-Spektroskopie) bestimmt, wie in der Beschreibung beschrieben, verhält,

wobei die Adsorbenspartikel durch ein Verfahren, das die folgenden Schritte umfasst, erzeugt werden:

Waschen von Aluminiumoxidwerkstoffen, die ein oder mehr Alkalimetalle und eine Karbonatverbindung umfassen; und

Trocknen der gewaschenen Aluminiumoxidwerkstoffe, um die Adsorbenspartikel zu bilden;

wobei die gewaschenen und getrockneten Adsorbenspartikel das Karbonat- zu Aluminiumoxidintensitätsverhältnis $R_2$ aufweisen, das kleiner ist als das Karbonat- zu Aluminiumoxidintensitätsverhältnis $R_1$ vor dem Waschen.

2. Adsorbenspartikel nach Anspruch 1, wobei die Gesamtmenge an Alkalimetallen in dem Adsorbens 1,0 Gew.-% bis 8 Gew.-% beträgt.

3. Adsorbenspartikel nach einem der vorstehenden Ansprüche, wobei die Menge an Aluminiumoxid in dem Adsorbens 90 bis 99 Gew.-% beträgt.

4. Adsorbenspartikel nach einem der vorstehenden Ansprüche, wobei die Alkalimetalle Na und/oder K sind.

5. Adsorbenspartikel nach einem der vorstehenden Ansprüche, wobei in dem Adsorbens die Karbonatmenge niedriger als die zum stöchiometrischen Kompensieren der Füllung der Gesamtmenge an Alkalimetallen arithmetisch erforderlichen Karbonatmenge ist.

6. Adsorbenspartikel nach einem der vorstehenden Ansprüche, wobei der Wert des Karbonat- zu Aluminiumoxidintensitätsverhältnisses von 0,003 bis 0,0150 reicht.

7. Verfahren zum Herstellen von Adsorbenspartikeln nach einem der Ansprüche 1 bis 6 zur Verwendung bei einem Prozess, um $CO_2$ aus einem $CO_2$-haltigen Gasgemisch zu entfernen, wobei die Adsorbenspartikel Aluminiumoxid, ein oder mehrere Alkalimetalle und eine Karbonatverbindung umfassen, wobei das Verfahren Folgendes umfasst:

Waschen von Aluminiumoxidwerkstoffen, die ein oder mehr Alkalimetalle und eine Karbonatverbindung mit Wasser umfassen; und

Trocknen der gewaschenen Aluminiumoxidwerkstoffe, um die Adsorbenspartikel zu bilden; wobei die gewaschenen und getrockneten Adsorbenspartikel ein Karbonat- zu Aluminiumoxidintensitätsverhältnis $R_2$ aufweisen, das kleiner ist als das Karbonat- zu Aluminiumoxidintensitätsverhältnis $R_1$ der Aluminiumoxidverbindung, die einen oder mehrere Typen von Alkalimetallionen und Karbonationen vor dem Waschen umfasst; und wobei sich das Karbonat- zu Aluminiumoxidintensitätsverhältnis wie von Fourier-Transformation-Infrarotspektroskopie (FTIR-Spektroskopie) bestimmt, wie in der Beschreibung beschrieben, verhält.

8. Verfahren nach Anspruch 7, wobei die Aluminiumoxidwerkstoffe, die ein oder mehr Alkalimetalle und eine Karbonatverbindung umfassen, mit Wasser gewaschen werden, bis die Aluminiumoxidwerkstoffe einen pH in Lösung von 9,5 oder weniger aufweisen, wodurch gewaschene Aluminiumoxidwerkstoffe gebildet werden, wobei der pH in Lösung, wie durch Messen des pH einer equilibrierten 2-Liter-Lösung aus deionisiertem Wasser bestimmt, 100 g der gewaschenen Aluminiumoxidwerkstoffe enthält.

9. Verfahren nach einem der Ansprüche 7 oder 8, wobei die Aluminiumoxidwerkstoffe, die ein oder mehr Alkalimetalle und eine Karbonatverbindung umfassen, mit Wasser gewaschen werden, das weniger als 100 ppm gelöste Feststoffe insgesamt enthält.

10. Prozess zum Entfernen von $CO_2$ aus einem $CO_2$-haltigen Gasgemisch, wobei der Prozess Folgendes umfasst: Leiten des $CO_2$-haltigen Gasgemischs in ein Bett, das die Adsorbenspartikel nach einem der Ansprüche 1 bis 6 enthält; und Entnehmen eines $CO_2$-verarmten Gases aus dem Bett.

11. Adsorptionseinheit, die ein Bett umfasst, das die Adsorbenspartikel nach einem der Ansprüche 1 bis 6 enthält.

**Revendications**

1. Particules adsorbantes pour utilisation dans un procédé pour éliminer du $CO_2$ d'un mélange gazeux contenant du $CO_2$,

dans lesquelles l'adsorbant est défini tel que suit :

- de l'alumine ;
- un composé carbonate ; et
- un ou plusieurs métaux alcalins ;

dans lesquelles la quantité totale de métaux alcalins dans l'adsorbant est de 0,9 % en poids à 10 % en poids ; et
dans lesquelles l'adsorbant a un rapport d'intensité carbonate/alumine, $R_2$, le rapport d'intensité carbonate/alumine, $R_2$, ayant une valeur inférieure ou égale à 0,0150, où le rapport d'intensité carbonate/alumine est tel que déterminé par spectroscopie infrarouge à transformée de Fourier (FTIR), comme décrit dans la description, dans lesquelles les particules adsorbantes sont produites par un procédé comprenant les étapes suivantes :

le lavage de matériaux d'alumine qui comprennent un ou plusieurs métaux alcalins et un composé carbonate avec de l'eau ; et
le séchage des matériaux d'alumine lavés pour former les particules adsorbantes ;
dans lesquelles les particules adsorbantes lavées et séchées ont ledit rapport d'intensité carbonate/alumine, $R_2$, qui est inférieur au rapport d'intensité carbonate/alumine, $R_1$, avant le lavage.

2. Particules adsorbantes selon la revendication 1, dans lesquelles la quantité totale de métaux alcalins dans l'adsorbant est de 1,0 % en poids à 8 % en poids.

3. Particules adsorbantes selon l'une quelconque des revendications précédentes, dans lesquelles la quantité d'alumine dans l'adsorbant est de 90 à 99 % en poids.

4. Particules adsorbantes selon l'une quelconque des revendications précédentes, dans lesquelles les métaux alcalins sont Na et/ou K.

5. Particules adsorbantes selon l'une quelconque des revendications précédentes, dans lesquelles, dans l'adsorbant, la quantité de carbonate est inférieure à la quantité de carbonate arithmétiquement nécessaire pour compenser stoechiométriquement la charge de la quantité totale de métaux alcalins.

6. Particules adsorbantes selon l'une quelconque des revendications précédentes, dans lesquelles la valeur du rapport d'intensité carbonate/alumine est comprise entre 0,003 et 0,0150.

7. Procédé de fabrication de particules adsorbantes selon l'une quelconque des revendications 1 à 6 pour utilisation dans un procédé pour éliminer du $CO_2$ d'un mélange gazeux contenant du $CO_2$, les particules adsorbantes comprenant de l'alumine, un ou plusieurs métaux alcalins, et un composé carbonate, le procédé comprenant :

le lavage de matériaux d'alumine qui comprennent un ou plusieurs métaux alcalins et un composé carbonate avec de l'eau ; et
le séchage des matériaux d'alumine lavés pour former les particules adsorbantes ; dans lequel les particules adsorbantes lavées et séchées ont un rapport d'intensité carbonate/alumine, $R_2$, qui est inférieur au rapport d'intensité carbonate/alumine, $R_1$, du composé d'alumine qui comprend un ou plusieurs types d'ions de métaux alcalins et d'ions carbonate avant le lavage ; et dans lequel le rapport d'intensité carbonate/alumine est déterminé par spectroscopie infrarouge à transformée de Fourier (FTIR), comme décrit dans la description.

8. Procédé selon la revendication 7, dans lequel les matériaux d'alumine qui comprennent un ou plusieurs métaux alcalins et un composé carbonate sont lavés avec de l'eau jusqu'à ce que les matériaux d'alumine aient un pH en solution de 9,5 ou moins, formant ainsi des matériaux d'alumine lavés, le pH en solution étant déterminé en mesurant le pH d'une solution équilibrée de 2 litres d'eau désionisée contenant 100 g des matériaux d'alumine lavés.

9. Procédé selon l'une quelconque des revendications 7 et 8, dans lequel les matériaux d'alumine qui comprennent un ou plusieurs métaux alcalins et un composé carbonate sont lavés avec de l'eau contenant moins de 100 ppm de solides dissous totaux.

10. Procédé pour éliminer du $CO_2$ d'un mélange gazeux contenant du $CO_2$, le procédé comprenant :
le passage du mélange gazeux contenant du $CO_2$ dans un lit contenant les particules adsorbantes selon l'une quelconque des revendications 1 à 6 ; et le soutirage d'un gaz appauvri en $CO_2$ à partir du lit.

11. Unité d'adsorption comprenant un lit contenant les particules adsorbantes selon l'une quelconque des revendications 1 à 6.

Alumina PSA vs. Contact time
(P/F = 0.7)

FIG. 1

EP 3 375 517 B1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4249915 A
- US 4477264 A
- US 5232474 A
- US 4493715 A
- US 4433981 A
- US 3557025 A
- US 3865924 A
- US 5656064 A
- US 6125655 A
- US 7759288 B
- US 20070037702 A1
- US 4755499 A
- US 3226191 A
- US 4568664 A
- US 5935894 A

- US 5656065 A
- US 5919286 A
- US 4512780 A
- US 5203888 A
- US 6454838 B
- US 5156657 A
- US 20140373713 A
- US 5614000 A
- US 5855650 A
- US 7022159 B
- US 5846295 A
- US 5137548 A
- US 4541851 A
- US 4233038 A
- US 3710547 A

**Non-patent literature cited in the description**

- **ESHEL et al.** *Soil Sci. Soc. Am. J.,* 2004, vol. 68, 736-743
- **RAHIMPOUR et al.** *Chemical Engineering and Processing,* 2004, vol. 43, 857-865

- **HARRIS.** *The Canadian Journal of Chemical Engineering,* 1963, vol. 41 (4